Europäisches Patentamt

(19) European Patent Office

Office européen des brevets

(11) **EP 0 967 781 A1**

## (12) EUROPEAN PATENT APPLICATION

(43) Date of publication:
**29.12.1999 Bulletin 1999/52**

(51) Int. Cl.⁶: **H04N 1/053**

(21) Application number: **99201887.9**

(22) Date of filing: **14.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.06.1998 US 105727**

(71) Applicant: **EASTMAN KODAK COMPANY**
**Rochester, New York 14650 (US)**

(72) Inventors:
- **Weaver, Thomas C.,**
  **Eastman Kodak Company**
  **Rochester, New York 14650-2201 (US)**
- **Rockwell, Thomas L.,**
  **Eastman Kodak Company**
  **Rochester, New York 14650-2201 (US)**

(74) Representative:
**Nunney, Ronald Frederick Adolphe et al**
**Kodak Limited,**
**Patents, W92-3A,**
**Headstone Drive**
**Harrow, Middlesex HA1 4TY (GB)**

(54) **Clock synchronization for optical beam splitter**

(57) A method and apparatus for synchronizing digital data for a plurality of adjacent lines of a digital image within a fraction of a pixel, comprised of a predetermined timing chain. The timing chain is divided in to a plurality of different clock chains each delayed by a predetermined increment. The plurality of different clock chains inputted to a multiplexer which later selects one of said plurality of different clock chains for use as a pixel clock. A comparator takes a consecutive portion of said plurality of different clock chains and compares them to a line start signal. The positioning of the line start signal relates to one of the plurality of different clock chains. A multiplexer sends out a clock chain based on the comparison of the comparator.

FIG. 1

## Description

### FIELD OF THE INVENTION

This invention relates generally to pixel clocks, and in particular to a pixel clock used in high-speed digital printers.

### BACKGROUND OF THE INVENTION

Three-color laser scanners are used in high speed digital printers that scan images into memory, allow image manipulation, and finally produce hard copy printouts on receiver material. The laser beams pass through respective acousto-optic modulators that are controlled by a pixel data stream received from printer electronics synchronized by pixel pulse chains. Laser light beams from the three acousto-optic modulators are optically combined and focused on a rotating polygon mirror, which sweeps the beams across a web of receiver material through an f-θ lens to create a print line.

A laser printer frequently uses a rotating polygon to scan a laser writing beam across a page. As the laser beam moves, a line of digital data is written pixel-by-pixel on a photosensitive medium. Successive lines of digital data (pixels) are written as the medium moves. For example, a laser printer may have an oscillator that controls digital data applied to a laser writing beam. The laser writing beam passes through an optical system and is directed by a beam deflecting unit (for example, rotating polygon mirror) to a photosensitive medium, such as a drum. The oscillator and beam deflecting unit operate asynchronously.

To insure acceptable output, the point at which the printer starts writing each line must be precisely controlled. Inconsistent starting points for writing a line result in "image noise" defects from misplaced pixels. Generally, a crystal oscillator is synchronized to a start-of-line signal. A high frequency clock that is η-times the desired pixel writing frequency is sometimes used. A rising edge of the output of a high frequency clock that is close to the start-of-line signal is selected. However, this results in high frequency noise on the chip, and a system that uses a pulse generator at one pulse per pixel can only be accurate to within one pixel.

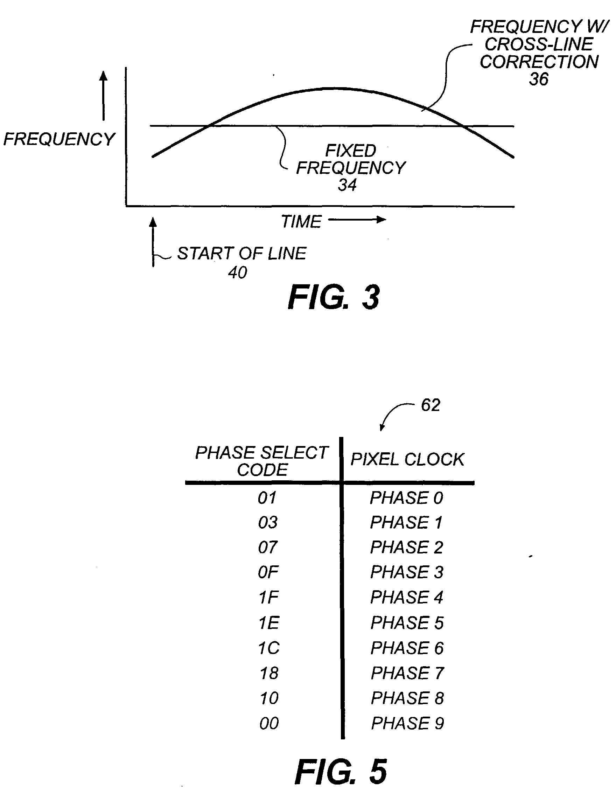

U.S. Patent No. 5,477,330, which issued to Stanley A. Dorr on December 19, 1995, discloses a device for phase synchronizing a fixed-phase clock to an asynchronous start-of-line signal, and for generating a variable-frequency clock waveform from a fixed-frequency clock. Fig. 3 of the Dorr patent discloses a circuit for producing, in a beam scanning image from a continuous fixed-frequency clock that is of random phase relative to a scanning energy beam, a pixel placement timing chain. This system uses a second stage detector to maintain accuracy of the synchronization circuit which adds cost to the system. This system discloses only a fixed frequency start-of-line synchronization.

A method is needed to insure that each line of digital data starts consistently with respect to the other lines of data that form the complete image to be printed, even when the oscillator frequency is non-linear.

### SUMMARY OF THE INVENTION

It is an object of the present invention to eliminate the need for a second stage detector while maintaining the accuracy of the synchronization circuit.

It is another object of the present invention to provide reduced costs and greater reliability by reducing the parts count of a synchronization circuit.

It is still another object of the present invention to provide a synchronization circuit with a small circuit board footprint.

It is yet another object of the present invention to provide pixel error of less than one pixel.

A clock synchronization method is presented that synchronizes digital data from any oscillator frequency to provide a consistent start-of-line point. By passing a 1x pulse chain through a phase delay and to generate multiple, shifted signals, the frequency is still only 1x, but there is no high frequency noise on the chip.

A method and apparatus for synchronizing digital data for a plurality of adjacent lines of a digital image within a fraction of a pixel comprised of a predetermined timing chain. The timing chain is divided into a plurality of different clock chains, each delayed by a predetermined increment. The plurality of different clock chains is inputted to a multiplexer which later selects one of said plurality of different clock chains for use as a pixel clock. A comparator takes a consecutive portion of said plurality of different clock chains and compares them to a start-of-line signal. The positioning of the start-of-line signal relates to one of the plurality of different clock chains. A multiplexer sends out a clock chain based on the comparison of the comparator.

The invention, and its objects and advantages, will become more apparent in the detailed description of the preferred embodiments presented below.

### BRIEF DESCRIPTION OF THE DRAWINGS

In the detailed description of the preferred embodiments of the invention presented below, reference is made to the accompanying drawings, in which:

FIG. 1 shows a schematic printer made in accordance with the present invention;
FIG. 2 is a block diagram of a pixel synchronization circuit of the printer of FIG. 1;
FIG. 3 is a plot showing an oscillator with a fixed frequency compared to one with a non-linear "cross-line" correction;
FIG. 4 shows a phase selection decoding method;

FIG. 5 shows a look-up table for identifying the appropriate pulse chain; and

FIG. 6 shows the relation between the pixel clock and delayed start-of-line signal.

## DETAILED DESCRIPTION OF THE INVENTION

The present description will be directed in particular to elements forming part of, or cooperating more directly with, an apparatus in accordance with the present invention. It is to be understood that elements not specifically shown or described may take various forms well known to those skilled in the art. While the invention is described below in the environment of a digital printer, it will be noted that the invention can be used with other types of scanners and/or printing devices.

The current laser printer independently controls each of the color planes that form an image. In order to adjust for optical distortions, the frequencies at which each color plane is clocked is handled independently to insure that the pixels from each color plane are aligned. The circuit described below allows the pixel clock for each color plane to be adjusted, with one circuit being used for each color plane.

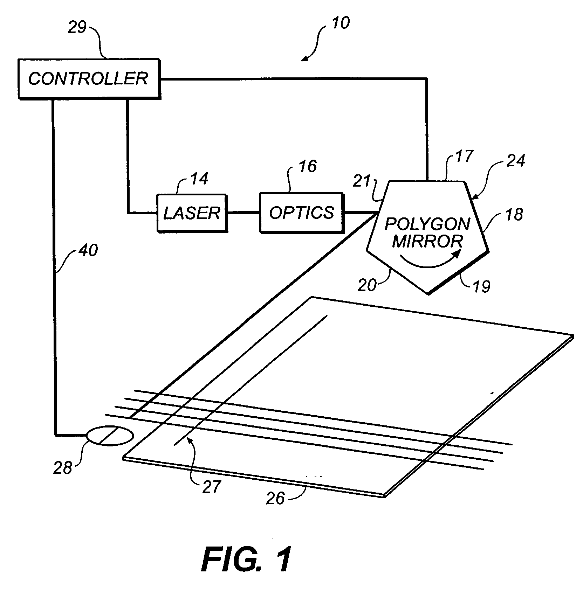

A laser printer 10, shown schematically in Fig. 1, illustrates how a light beam 12 of a laser 14 traverses optics 16 and reflects off one of the facets 17, 18, 19, 20, 21 of the rotating polygon mirror 24. The laser 14 when turned on will provide a light beam 12, which will reflect off the initial portion of the start-of-line region of the facets. As the polygon mirror 24 rotates, the reflected beam 12 sweeps across a print space toward a photosensitive medium 26 (for example, a photosensitive drum or photosensitive material such as photographic paper, film, or thermal paper) so as to provide a print path (line) 27. When the reflected beam crosses start-of-line signal detector 28, which in the present invention is a split cell sensor, as it travels across a printing path 27, a start-of-line signal 40 is produced and received by controller 29 of the printer 10.

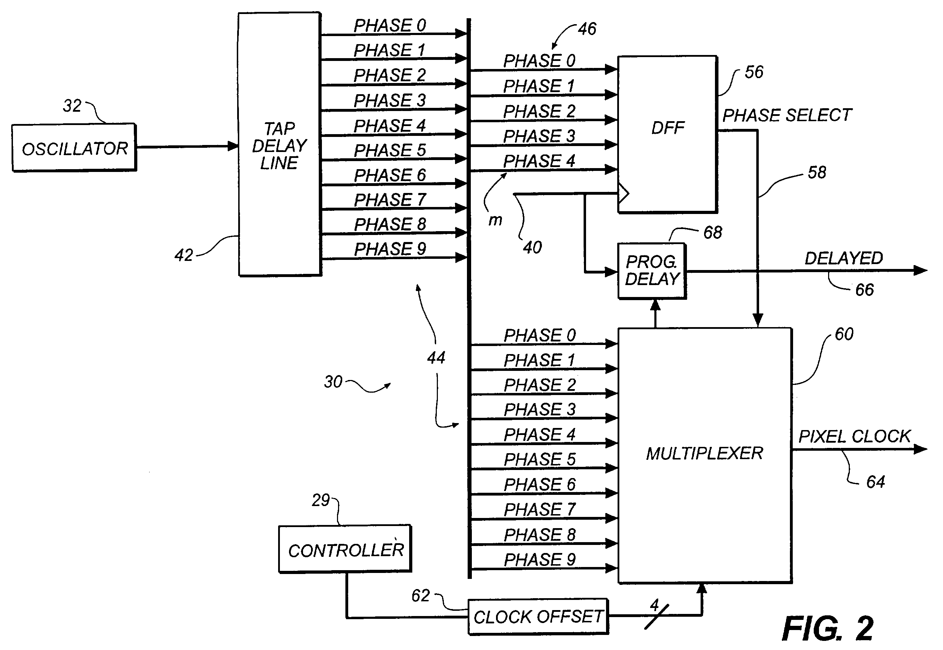

In the embodiment illustrated, the controller 29 includes a clock synchronization circuit 30 shown schematically in Fig. 2. The clock synchronization circuit 30 includes an oscillator 32 that operates at a writing frequency that may be fixed, as illustrated by line 34 (see Fig. 3), or non-linear as illustrated by line 36 with a start-of-line signal 40. In the embodiment illustrated, the oscillator is fixed at 20 MHz. Non-linear frequency, such as shown by line 36, can be used to compensate for variable scan rates resulting from the use of f-θ lenses. Oscillator 32 generates a timing chain which is fed into a tap delay line 42 that operates at the same period as oscillator 32. Delay line 42 produces a plurality of different pulse chains 44 each delayed by an increment. For example, a delay line with 10 taps (pulse chains) has an increment of 1/10 of the oscillator period. Each tap is thus delayed 10% with respect to the previous tap. Thus delay line 42 outputs a number of phase delayed signals 44. In the embodiment illustrated, pulse chains 44 represented by phase 0 through phase 9.

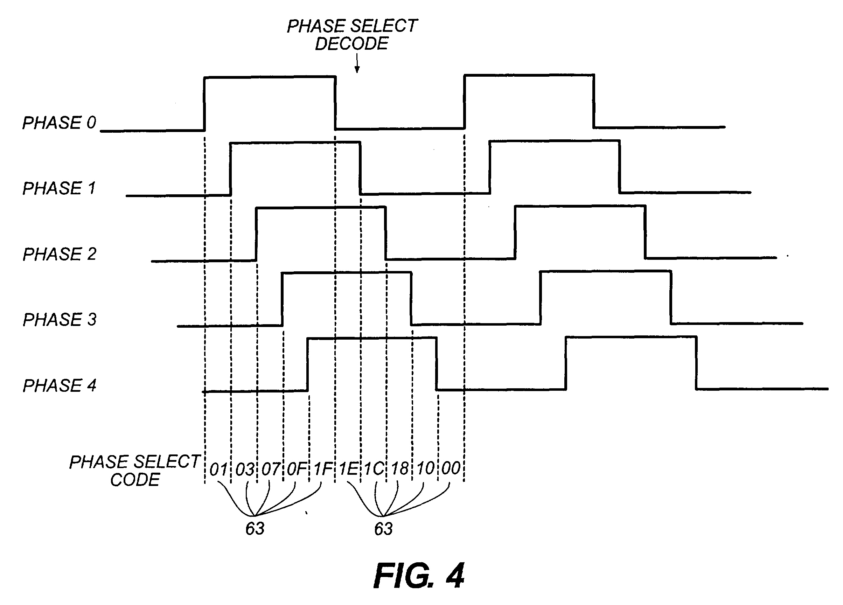

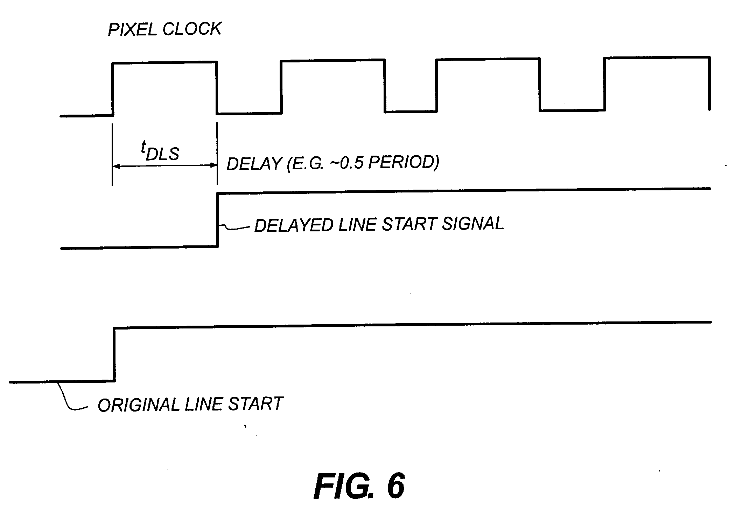

A selected portion 46 of the phase delayed signals 44, which are consecutive, output by tap delay line 42 are sent to a phase comparator 56, which in this case includes a bank of flip flops. In the embodiment illustrated, half of the signals 44 are sent to the comparator 56 and in particular, phase 0, phase 1, phase 2, phase 3, and phase 4. The comparator 56 is designed so that only a single latch is needed. The comparator 56 has programmed therein a look-up table (not shown) which contains data relating the position of the start-of-line signal to the five phase signals (phase 0 to 4) of the selected portion 46. In Fig. 4, there is illustrated the five selected pulse chains (phases 0 to 4) which are divided into ten phase selection codes 63. When the start-of-line signal 40 is received by comparator 56, it is compared to the five pulse chains of the selected portion 46. The clock to comparator 56 is the start-of-line signal 40 which is the asynchronous start-of-line signal created by the beam traveling across the start-of-line split cell detector 28. The location of the start-of-line signal 40 on Fig. 4 with respect to the five phases (phases 0 to 4) will determine which pixel clock chain is selected. Thus, if start-of-line 40 falls within region "07," then pixel clock code 07 is sent to multiplexer 60 which selects the appropriate pulse chain from a look-up table (see Fig. 5) which would be phase 2. If the start-of-line falls within the range defined by phase select code "1C," this is sent to multiplexer 60 and phase 6 is selected as the pixel clock. Likewise, depending on the results of comparator 56, the appropriate phase is selected for the pixel clock.

To determine circuit values, the following relationships are followed:

(1) desired pixel placement error = 1/10 pixel = 0.1 pixel
(2)

$$\eta = \frac{1}{desired\ pixel\ placement\ error}$$

wherein $\eta$ = total number of phases
(3) m = number of phase needed for analysis
(4)

$$m = \left(\frac{\eta}{2}\right)\ rounded\ up$$

This produces a value which is latched in for the duration of the current line.

An even number of phases is preferred for simplicity of calculations, but an odd number of phases is also accommodated by this design. This value of $\eta$ is then fed into multiplexer 60 with the full number of phases 44 and the proper phase desired is selected and delivered. Multiplexer 60 receives the phase delayed signals 44 from tap delay line 42, as well as a clock offset 62 from controller 29. Multiplexer 60 outputs a pixel pulse chain 64.

A separate clock offset is provided for each color plane, and clock offset 62 is used to properly register the color planes. For each color plane synchronization circuit 30, the clock offset 62 from the controller 29 determines the sub-pixel delay of the output signal which is the pixel clock 64. If the pixel clock 64 is delayed in tenths of a pixel, then the signal delayed start-of-line 66 also needs to be delayed an appropriate amount to insure against meta-stability problems in the logic that uses start-of-line. Clock offset 62 also determines how much to delay start-of-line for each color plane in order to produce each signal delayed start-of-line 66. Ideally, the delayed start-of-line should be placed in the middle of the pixel clock period. See Fig. 6.

A programmable delay 68, initiated when the start-of-line signal 40 is received from detector 28, insures that delayed start-of-line signal 66 does not occur near a clock edge of pixel clock in order to avoid meta-stability in the state machine logic. The amount of delay provided by programmable delay 68 includes a minimum delay value plus an incremental delay value based on the value of clock offset 62. For example, the minimum delay may be approximately equal to one-half of the pixel clock period to avoid any noise occurring when the pixel clock synchronizes with start-of-line signal 40. Added to this minimum delay is an incremental delay value related to the clock offset value. For example, the incremental delay value could be as follows:

| Clock Offset Value | Incremental Delay Value |
|---|---|
| 0 | 0 |
| 1 | $(1/\eta)$*pixel clock period |
| 2 | $(2/\eta)$*pixel clock period |
| 3 | $(3/\eta)$*pixel clock period |
| ... | ... |
| $\eta$-1 | $((\eta-1)/\eta)$*pixel clock period |

Thus, with a clock offset value of 3, this example would provide a total delay value $T_{DLS}$ of (0.5 + 0.3) pixel clock periods, or 0.8 pixel clock periods. See Fig. 6. When the programmed delay has been achieved, a delayed start-of-line signal 66 is output.

The meta-stability of this clock synchronization circuit is minimal and very predictable. If the system goes trough a meta-stable point, the pixel placement will be no more than $(1/\eta)$ pixel displaced in comparator 56. Thus, the present invention provides for pixel error of less than one pixel.

The devices, such as printers, using this re-synchronized pulse chain have a one clock meta-stable region that can be compensated for by delaying start-of-line signal 40 by one-half of a clock period and holding the state machine in an idle loop looking for start-of-line signal before doing any further processing.

In operation, the system evaluates the first five phases (phases 0-4). Looking at phases 0 to 4, the one that lines up with the start-of-line signal is selected. Even though the system is looking at only the first $\eta/2$ phases, the symmetry of the period gives rise to the "missing information" to fully quantify the clock selection. Therefore, the system is very stable because there is only a few incoming phases. Further, if a phase detection should go metastable, the system will only fail to the nearest neighbor, resulting in the signal being off by a maximum of 2/10 pixel rather than failing to a completely errant clock phase.

While in the embodiment described, a .1 pixel error is used, other fractional pixel errors may be selected and appropriate number of phases can be determined in the manner discussed above.

**PARTS LIST**

| | |
|---|---|
| 10 | laser printer |
| 12 | beam |
| 14 | laser |
| 16 | optics |
| 17 | facet |
| 18 | facet |
| 19 | facet |
| 20 | facet |
| 21 | facet |
| 24 | polygon mirror |
| 26 | photosensitive medium |
| 27 | print path (line) |
| 28 | signal detector |
| 29 | controller |
| 30 | synchronization circuit |
| 32 | oscillator |
| 34 | fixed frequency |
| 36 | fixed frequency |
| 40 | start-of-line signal |
| 42 | tap delay line |
| 44 | phase delayed signal |
| 46 | selected portion |
| 56 | phase comparator |
| 58 | phase selection code |
| 60 | multiplexer |
| 62 | clock offset |
| 64 | pixel pulse chain |
| 66 | signal delayed start-of-line |
| 68 | programmable delay |

**Claims**

1. A method for synchronizing digital data for a plurality of adjacent lines of a digital image less than one pixel, comprising the steps of:

    a) generating a predetermined timing chain;
    b) taking said timing chain and producing a plurality of different clock chains, each delayed by a predetermined increment;
    c) inputting said plurality of different clock chains to a multiplexer which later selects one of said plurality of different pulse chains for use as a pixel clock;
    d) taking a consecutive portion of said plurality of different pulse chains and inputting them to a comparator, said comparator having stored data relating a plurality of different predetermined phase selection codes, each of said codes being associated with respect to the position of a line start signal with one of said plurality of different clock chains;
    e) comparing a start-of-line signal inputted to comparator with said consecutive portion of said plurality of different clock chains and selecting the phase selection code based on the position of the start-of-line signal and sending the selected code to the multiplexer; and
    f) the multiplexer outputting the clock chain associated with said selected predetermined phase selection code for the pixel clock.

2. An apparatus for synchronizing digital data for a plurality of adjacent lines of a digital image less than one pixel, comprising:

    a generator for generating a predetermined timing chain;
    a tap delay line for taking said timing chain and producing a plurality of different clock chains each delayed by a predetermined increment;
    multiplexer for selecting one of said plurality of different pulse chains for use as a pixel clock; and
    a comparator for taking a consecutive portion of said plurality of different clock chains, said comparator having stored data relating a plurality of different predetermined phase select codes each associated to one of said plurality of different clock chains, said comparator compares the start-of-line signal with said consecutive portion of said plurality of different pulse chains and selecting one of said selection codes based thereon and sends the selection code to the multiplexer, the multiplexer outputting the clock chain associated with said selected selection code for the pixel clock.

3. A method for synchronizing digital data for a plurality of adjacent lines of a digital image less than one pixel, comprising the steps of:

    a) generating a predetermined timing chain;
    b) taking said timing chain and producing a plurality of different clock chains each delayed by a predetermined increment;
    c) inputting said plurality of different clock chains to a multiplexer which later selects one of said plurality of different pulse chains for use as a pixel clock;
    d) taking a consecutive portion of said plurality of different clock chains and inputting them to a comparator;
    e) comparing a start-of-line signal inputted to comparator with said consecutive portion of said plurality of different clock chains and providing a selection code based on the position of the line start signal and sending the selected code to the multiplexer, said selection code being associated with one of said plurality of different pulse chains; and
    f. the multiplexer outputting a clock chain associated with said selected code for the pixel clock.

4. An apparatus for synchronizing digital data for a plurality of adjacent lines of a digital image less than one pixel, comprising:

    a generator for generating a predetermined timing chain;
    a tap delay line for taking said timing chain and producing a plurality of different clock chains each delayed by a predetermined increment;
    multiplexer for selecting one of said plurality of different pulse chains for use as a pixel clock; and
    a comparator for taking a consecutive portion of said plurality of different clock chains, said comparator compares the start-of-line signal with said consecutive portion of said plurality of different pulse chains and selecting one of said selection codes based thereon and sends the selection code to the multiplexer, the multiplexer outputting the clock chain associated with said selected selection code for the pixel clock.

5. The method according to claim 1 where said predetermined timing chain is linear.

6. The method according to claim 2 wherein an oscillator is used to generate the timing chain.

7. The method according to claim 3 wherein the oscillator is operated at 20 MHz.

8. The method according to claim 1 wherein said plurality of different pulse chains comprises 10.

9. The method according to claim 1 wherein said consecutive portion of said plurality of pulse chain comprises one half of the said plurality of pulse chain.

10. The method according to claim 9 wherein said one half of the plurality of pulse chains is the first half of said plurality of said pulse chain.

11. The method according to claim 1 wherein said synchronizing digital data for a plurality of adjacent lines of a digital image is .1 pixel.

**FIG. 1**

FIG. 2

EP 0 967 781 A1

FREQUENCY W/
CROSS-LINE
CORRECTION
36

FREQUENCY

FIXED
FREQUENCY
34

TIME ──────▶

START OF LINE
40

## FIG. 3

~ 62

| PHASE SELECT CODE | PIXEL CLOCK |
|---|---|
| 01 | PHASE 0 |
| 03 | PHASE 1 |
| 07 | PHASE 2 |
| 0F | PHASE 3 |
| 1F | PHASE 4 |
| 1E | PHASE 5 |
| 1C | PHASE 6 |
| 18 | PHASE 7 |
| 10 | PHASE 8 |
| 00 | PHASE 9 |

## FIG. 5

PHASE SELECT
DECODE

PHASE 0

PHASE 1

PHASE 2

PHASE 3

PHASE 4

PHASE SELECT
CODE    01 03 07 0F 1F 1E 1C 18 10 00

63        63

*FIG. 4*

EP 0 967 781 A1

PIXEL CLOCK

$t_{DLS}$

DELAY (E.G. ~0.5 PERIOD)

DELAYED LINE START SIGNAL

ORIGINAL LINE START

**FIG. 6**

EP 0 967 781 A1

EP 0 967 781 A1

## EUROPEAN SEARCH REPORT

European Patent Office

**Application Number**

EP 99 20 1887

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | US 5 477 330 A (DORR STANLEY A) 19 December 1995 (1995-12-19) * abstract * * column 1, line 44 - line 50 * * column 1, line 7 - line 14 * * column 2, line 34 - column 3, line 28 * * figure 3 * | 3,4,7 | H04N1/053 |
| A | EP 0 789 483 A (HEWLETT PACKARD CO) 13 August 1997 (1997-08-13) * column 1, line 41 - line 43 * * figure 1 * | 1,2,5,6, 8-11 | |
| A | EP 0 503 643 A (MITA INDUSTRIAL CO LTD) 16 September 1992 (1992-09-16) * abstract * * claim 1 * | 1-11 | |
| A | US 5 014 137 A (SHIMADA KAZUYUKI) 7 May 1991 (1991-05-07) * abstract * * claim 1 * | 1-11 | **TECHNICAL FIELDS SEARCHED (Int.Cl.6)** H04N |

The present search report has been drawn up for all claims

| Place of search | Date of completion of the search | Examiner |
|---|---|---|
| THE HAGUE | 28 October 1999 | Stoffers, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 20 1887

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-1999

| Patent document cited in search report | | Publication date | Patent family member(s) | | Publication date |
|---|---|---|---|---|---|
| US 5477330 | A | 19-12-1995 | NONE | | |
| EP 0789483 | A | 13-08-1997 | US | 5760816 A | 02-06-1998 |
| | | | JP | 9263008 A | 07-10-1997 |
| EP 0503643 | A | 16-09-1992 | JP | 2667590 B | 27-10-1997 |
| | | | JP | 4282954 A | 08-10-1992 |
| | | | US | 5331342 A | 19-07-1994 |
| US 5014137 | A | 07-05-1991 | JP | 1987846 C | 08-11-1995 |
| | | | JP | 7022319 B | 08-03-1995 |
| | | | JP | 61150566 A | 09-07-1986 |
| | | | JP | 61150567 A | 09-07-1986 |

EPO FORM P0459

For more details about this annex : see Official Journal of the European Patent Office, No. 12/82